# EUROPÄISCHE PATENTSCHRIFT

(11) **EP 0 825 364 B1**
(45) Veröffentlichungstag und Bekanntmachung des Hinweises auf die Patenterteilung: **10.10.2001**
(21) Anmeldenummer: 97112682.6
(22) Anmeldetag: 24.07.1997
(51) Int. Cl.: F16H 59/02, F16H 59/10

(54) **Wähleinrichtung für ein Automatikgetriebe eines Kraftfahrzeugs**
Shift selector for automatic vehicle transmission
Dispositif de sélection pour boîte de vitesses automatique de véhicule automobile

(30) Priorität: 22.08.1996 DE 19633948
(43) Veröffentlichungstag der Anmeldung: 25.02.1998
(73) Patentinhaber: Bayerische Motoren Werke Aktiengesellschaft, 80788 München (DE)
(72) Erfinder: Neuner, Josef, 83063 Raubling (DE); Wöste, Norbert, 80939 München (DE)

(56) Entgegenhaltungen:
- EP-A- 0 754 884
- DE-A- 3 807 881
- DE-A- 19 600 526
- DE-C- 4 426 207

## Beschreibung

Die Erfindung betrifft eine Wähleinrichtung für ein Automatikgetriebe eines Kraftfahrzeugs nach dem Oberbegriff des Hauptanspruchs.

Es ist bereits bekannt, ein Automatikgetriebe und seine Wähleinrichtung so zu gestalten, daß der Fahrer mit der Wähleinrichtung die Möglichkeit hat, sich für Schrittschaltbetrieb oder Fahrstufenautomatik zu entscheiden.

Bei der Fahrstufenautomatik ist der Betriebsbereich des Automatikgetriebes in verschiedene, manuell vorwählbare Betriebsstufen unterteilt, die als Fahrstufen bezeichnet werden. Der Begriff Fahrstufen, wie er hier verwendet wird, umfaßt alle Betriebsstufen eines Automatikgetriebes, also auch die Park- oder Neutralposition. Die Fahrstufen werden eingelegt durch Betätigen der Wähleinrichtung, die über eine mechanische Verbindung eine hydraulische Getriebesteuer- und Parksperreneinrichtung ansteuert.

Im Schrittschaltbetrieb wird das Automatikgetriebe vom Fahrer manuell geschaltet. Er kann durch Verschwenken des Wählhebels aus einer Mittelstellung heraus jeweils einen Gang hoch- oder zurückschalten, je nachdem, in welche Richtung er den Wählhebel bewegt. Nach jedem Schaltvorgang stellt sich der Wählhebel in seine Mittelstellung zurück.

Eine solche Wähleinrichtung beschreibt die DE 44 26 207 C1.

Da der Einbauraum für die Wähleinrichtung im Kraftfahrzeug begrenzt ist, sollte diese möglichst kompakt und klein sein.

Daher ist es Aufgabe der Erfindung, eine Wähleinrichtung für ein Automatikgetriebe eines Kraftfahrzeugs so zu gestalten, daß sie aus möglichst wenig Teilen, kompakt und klein aufgebaut ist.

Die Aufgabe wird erfindungsgemäß mit dem kennzeichnenden Merkmal des Anspruchs 1 gelöst. Weitere Ausgestaltungen der Erfindung ergeben sich aus den Unteransprüchen.

Nach der Erfindung ist die mechanische Verbindung zwischen der Wähleinrichtung und mindestens der hydraulischen Getriebesteuereinrichtung eine Längsbewegungen übertragende Zug-/Druckverbindung, die bei Automatikbetrieb in der Fahrstufenwählgasse direkt am Wählhebel angelenkt ist.

Das hat den Vorteil, daß der Betätigungshebel entfällt, an dem nach dem Stand der Technik die Zug-/Druckverbindung, als Wählseil ausgebildet, angebracht ist. Ebenso können die weiteren Bauteile der Wähleinrichtung durch den Entfall des Betätigungshebels noch platzsparender und kompakter angeordnet werden. Desweiteren können sie noch einfacher so gestaltet und angeordnet werden, daß sie mehrere Funktionen übernehmen.

Eine bevorzugte Ausführung der Erfindung sieht vor, daß die Zug-/Druckverbindung beim schrittweisen Schalten der Gänge im manuellen Betrieb in der Schrittschaltgasse vom Wählhebel entkoppelt ist. Dies ist eine besonders einfache Möglichkeit, Schrittschaltung und Fahrstufenwähleinrichtung voneinander zu entkoppeln.

Weitere vorteilhafte Ausführungen der Erfindung optimieren diese zusätzlich in Hinsicht des Raumbedarfs und der Anzahl der Bauteile. Ebenso wird ein noch einfacherer Aufbau erreicht, der die Fertigungs- und Montagekosten der Wähleinrichtung senkt und ihr zuverlässiges Funktionieren gewährleistet. Wenn die Wähleinrichtung so aufgebaut ist, daß der Wählhebel über die erste Achse an der Kulisse gelagert ist, die über die zweite Achse am Rahmen angebracht ist, so kann diese Kulisse beim Schwenken des Wählhebels von einer Schaltgasse in die andere mit dem Wählhebel mitgeschwenkt werden. Die Rastmittel zum Festlegen der Schaltgassen können dabei einfach an Kulisse und fahrzeugfestem Rahmen ausgebildet werden. An diesem dann die Anschlagfläche, die die Längsbewegung des Wählhebels an der Stelle beschränkt, an der seine Querbewegung zwischen den Schaltgassen möglich ist. Zwischen Wählhebel und Kulisse und Zug-/Druckverbindung, insbesondere einem Haltefortsatz am wählhebelseitigen Ende der Zug-/Druckverbindung, sind vorteilhafterweise verschiedene Wirkflächen einfach angeordnet, die zur Betätigung der Schrittschaltung oder der Fahrstufenwähleinrichtung formschlüssig miteinander in Eingriff kommen. Alle Verriegelungs- und Betätigungsfunktionen für den Wählhebel werden durch Wirkflächen an Wählhebel, Rahmen, Kulisse und Zug-/Druckverbindung gesteuert, was den sehr einfachen Aufbau der Wähleinrichtung ermöglicht.

Ein bevorzugtes Ausführungsbeispiel der Erfindung ist in der nachfolgenden Beschreibung und der zugehörigen Zeichnung näher dargestellt. Es zeigen
- Figur 1: einen Querschnitt durch eine Wähleinrichtung mit einem in zwei Schaltgassen verschwenkbaren Wählhebel in der Schaltgasse der Fahrstufenautomatik,
- Figur 2: die Wähleinrichtung in einer Draufsicht, teilweise geschnitten,
- Figur 3: die an Kulisse und Rahmen ausgebildeten Rastmittel zum Festlegen der Schaltgassen in einem Teilschnitt und
- Figur 4: eine Seitenansicht der Wähleinrichtung mit Teilschnitt im Bereich des Wählhebels.

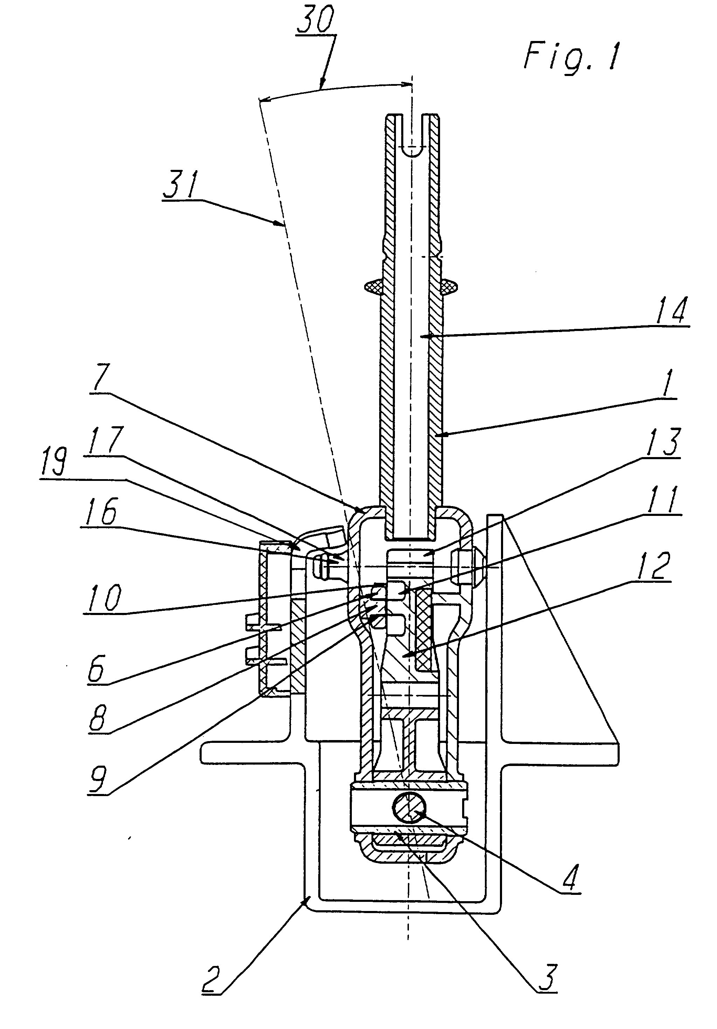

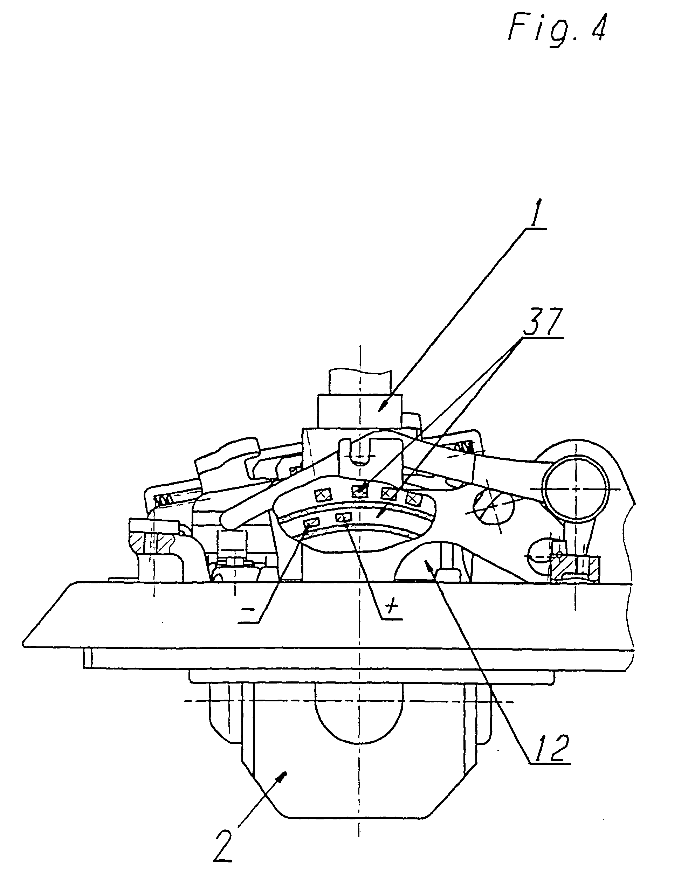

Nach Figur 1 ist ein Wählhebel 1 einer Wähleinrichtung für ein nicht dargestelltes Automatikgetriebe eines Kraftfahrzeugs in einem fahrzeugfesten Rahmen 2 über eine erste Achse 3 und eine zweite Achse 4 in zwei senkrecht aufeinander stehenden Richtungen beweglich gelagert. Die erste Achse 3 erstreckt sich in Fahrzeugquerrichtung und ermöglicht eine Bewegung des Wählhebels 1 in Fahrzeuglängsrichtung zum Vorwählen der einzelnen Fahrstufen oder Schalten der Gänge in Schrittschaltung. Die zweite Achse 4 erstreckt sich in Fahrzeuglängsrichtung und bildet damit die Schwenkachse des Wählhebels 1, um die dieser in Fahrzeugquerrichtung von einer Schaltgasse zum Vorwählen der Fahrstufen in eine Schaltgasse für Schrittschaltung geschwenkt werden kann. Der Schwenkwinkel 30 des Wählhebels 1 ist durch die zusätzlich eingezeichnete Mittellinie 31 für seine in die Schrittschaltgasse geschwenkte Lage angedeutet. In Figur 1 befindet sich der Wählhebel 1 in der Schaltgasse zum Vorwählen der Fahrstufen. In dieser Schaltgasse können durch die Schwenkbewegung des Wählhebels 1 um die erste Achse 3 nacheinander mindestens die einzelnen Fahrstufen P, R, N und D eingelegt werden. Die jeweils eingelegte Fahrstufe wird über die Position des Wählhebels erfaßt, durch in Figur 4 dargestellte elektrische Kontakte 37 einer Sensoreinrichtung an einer Kulisse 12.
Über eine mechanische Zug-/Druckverbindung, mit einem Haltefortsatz 6 an ihrem wählhebelseitigen Ende, wird die Bewegung des Wählhebels 1 in der Fahrstufenwählgasse zum Automatikgetriebe übertragen. Der Wählhebel 1 ist dazu formschlüssig mit dem Haltefortsatz 6 verbunden. Diese Verbindung entsteht durch sein Verschwenken aus der Schrittschaltgasse in die Fahrstufenwählgasse. Dabei schwenkt ein Schenkel 7 mit einer an ihm als Umfangsfläche eines Zapfens ausgebildeten zweiten Wirkfläche 8 in eine als Bohrungsinnenfläche ausgebildete dritte Wirkfläche 9 des Haltefortsatzes 6. Wird der Wählhebel 1 jetzt um die erste Achse 3 in der Fahrstufenwählgasse verschwenkt, bewegt sich der Haltefortsatz 6 und damit die Längsbewegung übertragende Zug-/Druckverbindung mit ihm mit, zur Ansteuerung des Automatikgetriebes über die hydraulische Getriebesteuereinrichtung.

Dabei wird der Haltefortsatz 6 in Fahrzeugquerrichtung im Wählhebel 1 auf dem Zapfen durch die Kulisse 12 gehalten. Hierzu liegt der Haltefortsatz 6 mit siebten Wirkflächen an der Kulisse 12 seitlich an fünften Wirkflächen 10 gleitend an, was eine zweite formschlüssige Verbindung zwischen Wählhebel 1 und Haltefortsatz 6 aufrecht erhält.

Desweiteren besitzt die Kulisse 12 eine nutförmige Ausnehmung 11, in die die weitere axiale Erstreckung des Haltefortsatzes 6 hineinragt. Die nutförmige Ausnehmung 11 ist so tief, daß der Haltefortsatz 6 von ihr beim Zurückschwenken des Wählhebels 1 von der Fahrstufenwählgasse in die Schrittschaltgasse aufgenommen werden kann. Dabei werden die erste Achse 3 und der Wählhebel 1, sowie die vom unteren Teil des Wählhebels 1 umgriffene Kulisse 12 um den Schwenkwinkel 30 gedreht. Drehachse ist die zweite Achse 4 in der Kulisse 12. Die erste Achse 3 ist in der Kulisse 12 gelagert und schwenkt mit.

Außerdem besitzt die Kulisse 12, die sich von ihrer Lagerstelle im Rahmen 2 nach oben erstreckt, an ihrer oberen Fläche Rastnasen 13, die mit einer nicht gezeichneten, am Wählhebel 1 ausgebildeten Sperreinrichtung zusammenwirken. Die Sperreinrichtung verläuft durch eine Bohrung 14 des Wählhebels 1 hindurch und kann zum Beispiel mit einer Taste am nicht gezeichneten Wählhebelgriff betätigt werden.

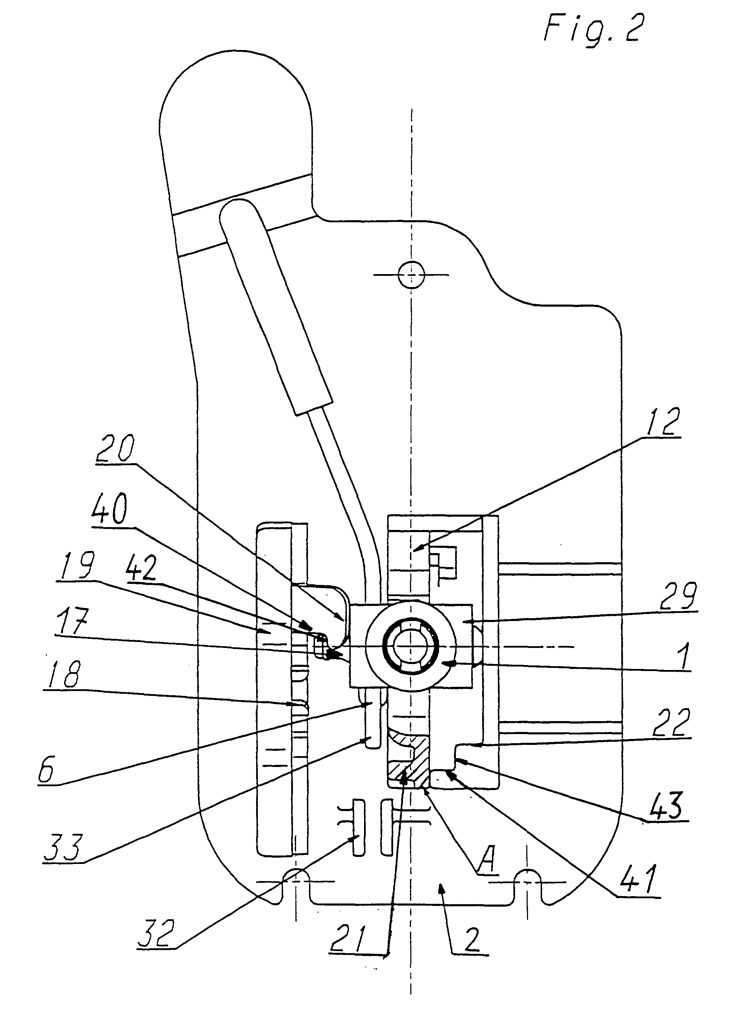

Für seine Schaltfunktionen in der Schrittschaltgasse besitzt der Wählhebel 1 am Schenkel 7 seines unteren Abschnitts eine Nut 16 mit ersten Wirkflächen 17, die durch das Schwenken des Wählhebels 1 mit entsprechenden Wirkflächen 18 (Figur 2) einer Schrittschalteinrichtung 19 formschlüssig in Eingriff kommen. In die Schrittschaltgasse geschwenkt, kann der Wählhebel 1 parallel zur Fahrstufenwählgasse um seine erste Achse 3 in Fahrzeuglängsrichtung von seiner Mittelstellung aus nach vorne und hinten bewegt werden. Die Schwenkbewegung erfolgt gegen die Kraft einer nicht dargestellten Feder, die in der Schrittschalteinrichtung 19 untergebracht ist. Diese Feder stellt den Wählhebel 1 immer wieder in die Mittelstellung zurück.

Die Sensoreinrichtung mit den elektrischen Kontakten 37 (Figur 4) an der Kulisse 12 ermittelt auch die Bewegungen des Wählhebels 1 in der Schrittschaltgasse und leitet die Schaltsignale an ein nicht gezeichnetes Getriebesteuergerät weiter, das diese verarbeitet. Bei einer Bewegung des Wählhebels 1 in Fahrtrichtung wird der nächsthöhere Gang, bei einer Bewegung des Wählhebels 1 entgegen der Fahrtrichtung wird der nächstniedrigere Gang eingelegt.

Wie Figur 2 zeigt, kann der Wählhebel 1, der sich in der Fahrstufenwählgasse befindet, nur in einer einzigen Stellung in dieser Gasse in die Schrittschaltgasse geschwenkt werden, nämlich dann, wenn gewährleistet ist, daß seine ersten Wirkflächen 17 mit den entsprechenden Wirkflächen 18 der Schrittschalteinrichtung 19 in Eingriff kommen können. Da sich die Schrittschalteinrichtung 19 in Ruhestellung immer in derselben Mittelstellung befindet, muß der Wählhebel 1 in der Fahrstufenwählgasse, vor seinem Schwenken in die Schrittschaltgasse, in die dafür entsprechende Position gebracht werden. Befindet er sich nicht in dieser Position, wird verhindert, daß der Wählhebel 1 in die Schrittschaltgasse geschwenkt werden kann. Dies wird durch eine vierte Wirkfläche 20 an der Schrittschalteinrichtung 19 erreicht, die beim Schwenken des Wählhebels 1 in falscher Position in die Schrittschaltgasse an seinem Schenkel 7 zur Anlage kommt.

Befindet sich der Wählhebel 1 in der Schrittschaltgasse, wird dessen Längsbewegung nach vorne durch eine erste weitere rahmenfeste Anschlagfläche 40 begrenzt, die als Endanschlag auf einer Seite des Wählhebels 1 mit diesem in Kontakt kommt. Die Längsbewegung des Wählhebels 1 nach hinten begrenzt eine zweite weitere rahmenfeste Anschlagfläche 41 als Endanschlag auf der anderen Seite des Wählhebels 1. Zusätzlich grenzen an die weiteren rahmenfesten Anschlagflächen 40, 41 weitere rahmenfeste Wirkflächen 42, 43 an, die eine Querbewegung des Wählhebels 1 verhindern, wenn sich dieser nicht in der Stellung befindet, in der das Zurückschalten in die Fahrstufenwählgasse möglich ist. Die zweite weitere rahmenfeste Anschlagfläche 41 und die weitere rahmenfeste Wirkfläche 43 sind direkt am Rahmen 2 ausgebildet.

Ein weiterer in Fahrzeugquerrichtung verlaufender Zapfen 21 an der Kulisse 12 blockiert durch sechste Wirkflächen an seinem Umfang den Haltefortsatz 6 in Fahrzeuglängsrichtung, wenn sich der Wählhebel 1 in der Schrittschaltgasse befindet und damit die zweite formschlüssige Verbindung außer Eingriff ist. Der Haltefortsatz 6 umgreift dazu den Zapfen 21 der Kulisse 12 in einer dritten formschlüssigen Verbindung.

In dieser Position wird der Haltefortsatz 6 in Fahrzeugquerrichtung ebenfalls festgelegt durch eine vierte formschlüssige Verbindung. Eine rahmenfeste Gabel 32 umgreift einen Fortsatz 33 des Haltefortsatzes 6.

Um die Position des Wählhebels 1, aus der ein Verschwenken in die Schrittschaltgasse möglich ist, leichter aufzufinden, besitzt der Rahmen 2 eine Anschlagfläche 22, die die Längsbewegung des Wählhebels 1 in der Fahrstufenvorwählgasse durch Zusammenwirken mit einem anderen Schenkel 29 des Wählhebels 1 an der Stelle begrenzt, an der das Hin- und Herschalten zwischen den Schaltgassen möglich ist.

An einer Stelle, die in Figur 2 durch einen Pfeil mit dem Bezugszeichen A gekennzeichnet ist, befindet sich eine in dieser Ansicht verdeckte Rasteinrichtung zwischen Kulisse 12 und Rahmen 2, die die Positionen der beiden Schaltgassen festlegt.

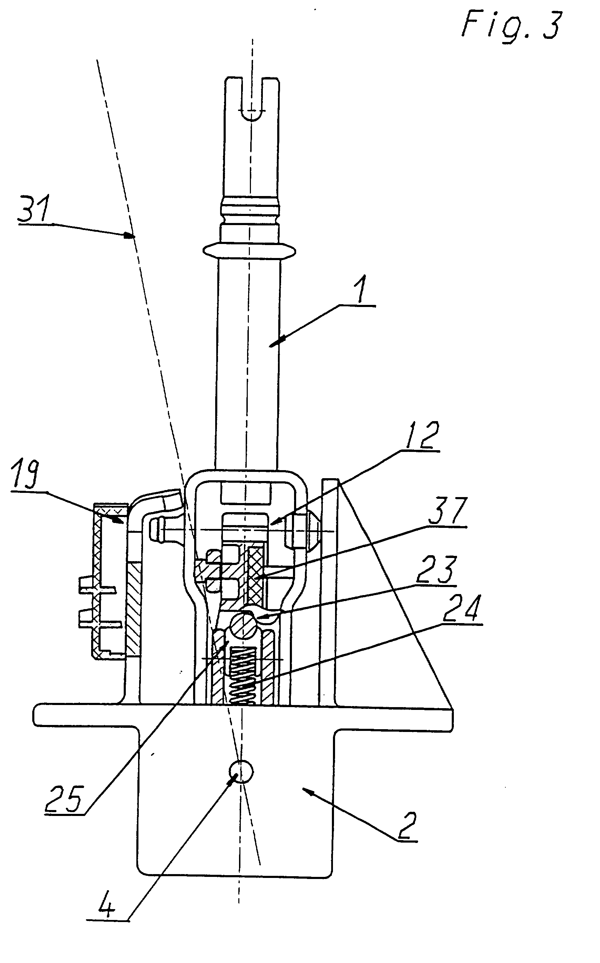

Figur 3 zeigt, daß die Kulisse 12 Rastmittel besitzt, die mit entsprechenden Rastmitteln am Rahmen 2 unter Federbelastung in Eingriff kommen und die Position des Wählhebels 1 für jede Schaltgasse in Fahrzeugquerrichtung festlegen. Die Rastmittel an der Kulisse 12 sind Ausnehmungen 23, in die ein durch eine Feder 24 belastetes, am Rahmen 2 beweglich gelagertes Element 25 mit seiner zylinderförmigen Oberfläche als entsprechendes Rastmittel eingreift.

Elektrische Kontakte 37 mindestens einer Sensoreinrichtung an der Kulisse 12 ermöglichen die Ermittlung der Position des Wählhebels 1 sowohl in der Fahrstufenwählgasse, als auch in der Schrittschaltgasse. Befindet sich der Wählhebel 1 in der Schrittschaltgasse, so werden die elektrischen Kontakte ausgewertet, die in Figur 4 mit + und - bezeichnet sind. Die Sensoreinrichtung kann wahlweise ein Analog- oder Digitalsensor sein. Desweiteren ist berührungslose oder berührungsbehaftete Weg- und/oder Winkelmessung geeignet.

## Patentansprüche

1. Wähleinrichtung, für ein Automatikgetriebe eines Kraftfahrzeugs, mit einer Schaltgasse, zum Vorwählen der einzelnen Fahrstufen im Automatikbetrieb über eine mechanische Verbindung zwischen der Wähleinrichtung und mindestens einer hydraulischen Getriebesteuereinrichtung und mit einer Schaltgasse zum schrittweisen Schalten der Gänge im manuellen Betrieb, mit einem in einem fahrzeugfesten Rahmen (2) über eine erste und eine zweite Achse (3, 4) in Fahrzeuglängs- und -querrichtung schwenkbar gelagerten Wählhebel (1), der durch Schwenken um die erste Achse (3) in jeweils einer der parallel verlaufenden Schaltgassen in Fahrzeuglängsrichtung bewegbar ist und durch Schwenken um die zweite Achse (4) in Fahrzeugquerrichtung zwischen diesen Schaltgassen hin- und herschaltbar ist, **dadurch gekennzeichnet, daß** die mechanische Verbindung eine Längsbewegungen übertragende Zug-/Druckverbindung ist, die im Automatikbetrieb direkt am Wählhebel (1) angelenkt ist.

2. Wähleinrichtung nach Anspruch 1, **dadurch gekennzeichnet, daß** die Zug-/Druckverbindung beim schrittweisen Schalten der Gänge im manuellen Betrieb vom Wählhebel (1) entkoppelt ist.

3. Wähleinrichtung nach Anspruch 1 oder 2, **dadurch gekennzeichnet, daß** der Wählhebel (1) über die erste Achse (3) an einer Kulisse (12) gelagert ist, die über die zweite Achse (4) am Rahmen (2) angebracht ist.

4. Wähleinrichtung nach einem der vorhergehenden Ansprüche, **dadurch gekennzeichnet, daß** der Wählhebel (1) erste und zweite Wirkflächen (17, 8) besitzt, wobei die ersten (17) durch sein Verschwenken um die zweite Achse (4) in einer Schaltgasse für Schrittschaltung mit entsprechenden Wirkflächen (18) einer Schrittschalteinrichtung (19) in Eingriff kommen und mit diesen eine erste formschlüssige Verbindung bilden und die zweiten Wirkflächen (8) durch sein Verschwenken um die zweite Achse (4) in einer Schaltgasse zum Vorwählen der einzelnen Fahrstufen im Automatikbetrieb mit entsprechenden dritten Wirkflächen (9) der Zug-/Druckverbindung in Eingriff kommen und mit diesen eine zweite formschlüssige Verbindung bilden.

5. Wähleinrichtung nach Anspruch 3 oder 4, **dadurch gekennzeichnet, daß** sich die Kulisse (12) von ihrer Lagerstelle im Rahmen (2) nach oben erstreckt und der untere Abschnitt des Wählhebels (1) U-förmig bis zu seiner Lagerachse (erste Achse 3) um die Kulisse (12) herumgreift, wobei die Kulisse (12) an ihrer oberen Fläche Rastnasen (13) aufweist, die mit einer am Wählhebel (1) ausgebildeten Sperreinrichtung zusammenwirken.

6. Wähleinrichtung nach einem der Ansprüche 3 bis 5, **dadurch gekennzeichnet, daß** die Kulisse (12) eine nutförmige Ausnehmung (11) und fünfte Wirkflächen (10) besitzt, die beim Schwenken des Wählhebels (1) um die erste Achse (3) in der Fahrstufenwählgasse mit siebten Wirkflächen an der Zug-/Druckverbindung, insbesondere an einem Haltefortsatz am Ende der Zug-/Druckverbindung, gleitend in Anlage sind, damit eine Bewegung der Zug-/Druckverbindung in Fahrzeugquerrichtung verhindert und somit die zweite formschlüssige Verbindung aufrecht erhalten wird.

7. Wähleinrichtung nach einem der Ansprüche 3 bis 6, **dadurch gekennzeichnet, daß** die Kulisse (12) sechste Wirkflächen besitzt, die beim Schwenken des Wählhebels (1) um die zweite Achse (4) in die Schrittschaltgasse mit den dritten Wirkflächen (9) an der Zug-/Druckverbindung, insbesondere einem Haltefortsatz am Ende der Zug-/Druckverbindung, eine dritte formschlüssige Verbindung eingehen, die die Zug-/Druckverbindung in Fahrzeuglängsrichtung festlegt, während die ersten Wirkflächen (17) bei Stellung des Wählhebels (1) in der Schaltgasse für Schrittschaltung die erste formschlüssige Verbindung mit der Schrittschalteinrichtung (19) bilden.

8. Wähleinrichtung nach einem der Ansprüche 1 bis 7, **dadurch gekennzeichnet, daß** der Rahmen (2) eine Anschlagfläche (22) besitzt, die die Längsbewegung des Wählhebels (1) in der Schaltgasse zum Vorwählen der Fahrstufen an der Stelle begrenzt, an der das Hin- und Herschalten zwischen den Schaltgassen möglich ist.

9. Wähleinrichtung nach einem der Ansprüche 1 bis 8, **dadurch gekennzeichnet, daß** am Rahmen (2) eine Gabel (32) ausgebildet ist, die einen Fortsatz (33) der Zug-/Druckverbindung dann aufnimmt, wenn sich der Wählhebel (1) in der Stellung befindet, in der das Hin- und Herschalten zwischen den Schaltgassen möglich ist.

10. Wähleinrichtung nach einem der Ansprüche 3 bis 9, **dadurch gekennzeichnet, daß** die Kulisse (12) Rastmittel besitzt, die mit einem entsprechenden Rastmittel am Rahmen (2) die Position des Wählhebels (1) für jede Schaltgasse in Fahrzeugquerrichtung festlegen.

11. Wähleinrichtung nach Anspruch 10, **dadurch gekennzeichnet, daß** die Rastmittel an der Kulisse (12) Ausnehmungen (23) sind und das entsprechende Rastmittel am Rahmen (2) durch ein an diesem unter Belastung einer Feder (24) gelagertes Element (25) mit abgerundeter Oberfläche gebildet wird.

12. Wähleinrichtung nach einem der Ansprüche 1 bis 11, **dadurch gekennzeichnet, daß** an der Kulisse (12) mindestens eine Sensoreinrichtung angebracht ist, die die Positionen des Wählhebels (1) in Fahrzeuglängsrichtung sowohl in der Fahrstufenwählgasse, als auch in der Schrittschaltgasse ermittelt.

13. Wähleinrichtung nach einem der Ansprüche 1 bis 12, **dadurch gekennzeichnet, daß** an ihr wenigstens eine weitere rahmenfeste Anschlagfläche (40) ausgebildet ist, die die Längsbewegung des Wählhebels (1) in der Schaltgasse für Schrittschaltung begrenzt.

14. Wähleinrichtung nach Anspruch 13, **dadurch gekennzeichnet, daß** an ihr zwei weitere rahmenfeste Anschlagflächen (40,41) ausgebildet sind und daß die erste weitere rahmenfeste Anschlagfläche (40) die Längsbewegung des Wählhebels (1) nach vorne begrenzt und als Endanschlag auf einer Seite des Wählhebels (1) mit diesem in Kontakt kommt und daß die zweite weitere Anschlagfläche (41) die Längsbewegung des Wählhebels (1) nach hinten begrenzt und als Endanschlag auf der anderen Seite des Wählhebels (1) mit diesem in Kontakt kommt.

15. Wähleinrichtung nach einem der Ansprüche 13 oder 14, **dadurch gekennzeichnet, daß** mindestens eine weitere rahmenfeste Anschlagfläche (40, 41) an eine weitere rahmenfeste Wirkfläche (42, 43) angrenzt, die eine Querbewegung des Wählhebels (1) verhindert, wenn sich dieser nicht in der Stellung befindet, in der das Hin- und Herschalten zwischen den Schaltgassen möglich ist.

16. Wähleinrichtung nach einem der Ansprüche 13 bis 15, **dadurch gekennzeichnet, daß** wenigstens eine der weiteren rahmenfesten Anschlagflächen (41) und / oder wenigstens eine der weiteren rahmenfesten Wirkflächen (43) direkt am Rahmen (2) ausgebildet ist.

## Claims

1. A selector device for an automatic gearbox of a motor vehicle, with one selection passage for pre-selection of the individual drive positions in automatic operation via a mechanical linkage between the selector device and at least one hydraulic gearbox control device and with one selection passage for stepwise selection of the gears in manual operation, with a selector lever (1) mounted in a vehicle-fast frame (2) rotatably mounted by a first and a second axle (3, 4) in the longitudinal and cross direction can be pivoted about the first axle (3) in one of the two parallel shifting passages in the longitudinal direction of the vehicle and by pivoting about the second axle (4) can be switched back and forth between these two shifting passages, **characterised in that** the mechanical linkage is a push-pull connection transmitting a longitudinal movement, which is directly jointed to the selector lever (1) in automatic operation.

2. A selector device according to Claim 1, **characterised in that** the push-pull linkage is uncoupled from the selector lever (1) for stepwise shifting of the gears in manual operation.

3. A selector device according to Claim 1 or Claim 2, **characterised in that** the selector lever (1) is mounted via the first axle (3) on a gate (12), which is attached to the frame (2) by the second axle (4).

4. A selector device according to one of the foregoing Claims, **characterised in that** the selector lever (1) has first and second working surfaces (17, 8) whereby the first (17) by its pivoting about the second axle (4) comes into engagement in a shifting passage for step shifting with corresponding working surfaces (18) of a step shifting device (19) and with them forms a first positive connection and the second working surfaces (8), by its pivoting about the second axle (4) into a shifting passage for the pre-selection of the individual drive positions in automatic operation come into engagement with corresponding third working surfaces (9) of the push-pull linkage and form a positive connection with this.

5. A selector device according to Claim 3 or Claim 4, **characterised in that** the gate (12) extends upward from its bearing position in the frame (2) and the lower section of the selector lever (1) grasps around the gate (12) in a U-shape up to its bearing axle (first axle 3), whereby the gate (12) has indexing noses (13) on its upper surface, which interoperate with a locking device formed on the selector lever (1).

6. A selector device according to one of the Claims 3 to 5, **characterised in that** the gate (12) has a groove shaped cut-out (11) and fifth working surfaces (10), which, on pivoting the selector lever (1) about the first axle (3) in the drive position selection passage, are in sliding contact with the seventh working surfaces on the push-pull linkage, especially on a retaining projection on the end of the push-pull linkage, so that any movement of the push-pull linkage in the direction across the vehicle is prevented and thus the second positive engagement is maintained.

7. A selector device according to one of the Claims 3 to 6, **characterised in that** the gate (12) has sixth working surfaces, which on pivoting the selector lever (1) about the second axle (4) in the step shifting passage enter a third positive engagement with the third working surfaces (9) on the push-pull linkage, especially a retaining projection on the end of the push-pull linkage, which establishes the push-pull linkage in the longitudinal direction of the vehicle, whilst in the position of the selector lever (1) in the passage for step shifting the first working surfaces (17) form the first positive engagement with the step shifting device (19).

8. A selector device according to one of the Claims 1 to 7, **characterised in that** the frame (2) has an abutment face (22), which limits the longitudinal movement of the selector lever (1) in the shifting passage for pre-selection of the driving positions at the position at which the to and fro switching between the shifting passages is possible.

9. A selector device according to one of the Claims 1 to 8, **characterised in that** a fork (32) is formed on the frame (2), which then accepts a projection (33) of the push-pull linkage, when the selector lever (1) is in the position in which the to and fro switching between the shifting passages is possible.

10. A selector device according to one of the Claims 3 to 9, **characterised in that** the gate (12) has indexing means, which with a corresponding indexing means on the frame (2) establish the position of the selector lever (1) for each shifting passage in the direction across the vehicle.

11. A selector device according to Claim 10, **characterised in that** the indexing means on the gate (12) are cut-outs (23) and the corresponding indexing means on the frame (2) are formed by an element (25) with a rounded surface mounted on it under the loading of a spring (24).

12. A selector device according to one of the Claims 1 to 11, **characterised in that** at least one sensor device is attached to the gate (12), which detects the position of the selector lever (1) in the longitudinal direction of the vehicle both in the drive position selection passage, and also in the step shifting passage.

13. A selector device according to one of the Claims 1 to 12, **characterised in that** at least one further frame-fast abutment face (40) is formed on it, which limits the longitudinal movement of the selector lever (1) in the shifting passage for step shifting.

14. A selector device according to Claim 13, **characterised in that** two further abutment faces (40, 41) are formed on it and that the first further frame-fast abutment face (40) limits the longitudinal movement of the selector lever (1) to the front and comes into contact with one side of the selector lever (1) as an end stop and that the second further abutment face (41) limits the longitudinal movement of the selector lever (1) to the rear and comes into contact as an end stop on the other side of the selector lever (1).

15. A selector device according to one of the Claims 13 or 14, **characterised in that** at least one further frame-fast abutment face (40, 41) borders a further frame-fast working surface (42, 43), which prevents any cross movement of the selector lever (1), if this is not in the position in which back and forth switching between the shifting passages is possible.

16. A selector device according to one of the Claims 13 to 15, **characterised in that** at least one of the further frame-fast abutment faces (41) and / or at least one of the further frame-fast working surfaces (43) is formed directly on the frame (2).

## Revendications

1. Installation de sélection pour une boîte de vitesses automatique d'un véhicule automobile, comprenant :
un couloir de commutation pour la présélection des différents étages de conduite en mode automatique, par une liaison mécanique entre l'installation de sélection et au moins une installation hydraulique de commande de boîte de vitesses, et
un couloir de commutation pour commuter pas-à-pas des rapports de vitesses en mode manuel,
un levier sélecteur (1) monté dans un boîtier (2) solidaire de la carrosserie du véhicule par un premier et un second axes (3, 4), par basculement dans la direction longitudinale du véhicule et dans la direction transversale à celle-ci, ce levier sélecteur, par basculement autour du premier axe (3), se déplaçant chaque fois dans un premier couloir de commutation parallèle à la direction longitudinale du véhicule et, par basculement autour du second axe (4), dans la direction transversale à la direction du véhicule, entre les couloirs de commutation permettant un basculement dans un sens ou dans l'autre,
**caractérisée en ce que**
la liaison mécanique est une liaison de traction/poussée transmettant des mouvements longitudinaux, cette liaison étant articulée directement sur le levier sélecteur (1) en mode de fonctionnement automatique.

2. Installation de sélection selon la revendication 1,
**caractérisée en ce que**
la liaison de traction/poussée est découplée lors de la commutation pas-à-pas des rapports de vitesses en mode manuel du levier sélecteur (1).

3. Installation de sélection selon la revendication 1 ou 2,
**caractérisée en ce que**
le levier sélecteur (1) est monté par un premier axe (3) dans une coulisse (12), et par le second axe (4) sur le châssis (2).

4. Installation de sélection selon l'une des revendications précédentes,
**caractérisée en ce que**
le levier sélecteur (1) possède une première et une seconde surfaces actives (17, 8), la première surface (17) venant en prise avec des surfaces actives (18) correspondantes d'une installation de commutation pas-à-pas (19), par son basculement autour du second axe (4), dans un couloir de commutation pour la commutation pas-à-pas, et forme avec cette surface une première liaison par la forme, et la seconde surface active (8), par son basculement autour du second axe (4) dans un couloir de commutation, pour présélectionner les différents étages de conduite en mode automatique avec les troisièmes surfaces actives (9) correspondantes de la liaison de traction/poussée et former avec celle-ci une seconde liaison par la forme.

5. Installation de sélection selon la revendication 3 ou 4,
**caractérisée en ce que**
la coulisse (12) s'étend vers le haut à partir de son palier dans le boîtier (2), et le segment inférieur du levier sélecteur (1) entoure la coulisse (12) suivant une forme de U jusqu'à son axe de palier (premier axe 3),
la coulisse (12) ayant des becs d'accrochage (13) au niveau de sa surface supérieure, ces becs coopérant avec une installation de verrouillage réalisée sur le levier sélecteur (1).

6. Installation de sélection selon quelconque des revendications 3 à 5,
**caractérisée en ce que**
la coulisse (12) possède une cavité (11) en forme de rainure et une cinquième surface active (10) qui, lorsqu'on bascule le levier sélecteur (1) autour de son premier axe (3), vient en appui de glissement dans le couloir de sélection des étages de conduite avec des septièmes surfaces actives de la liaison de traction/poussée, notamment sur un prolongement de fixation à l'extrémité de la liaison de traction/poussée, pour éviter le mouvement de la liaison de traction/poussée dans la direction transversale du véhicule et maintenir ainsi la seconde liaison par la forme.

7. Installation de sélection selon l'une quelconque des revendications 3 à 6,
**caractérisée en ce que**
la coulisse (12) possède des sixièmes surfaces actives qui, lors du basculement du levier sélecteur (1) autour du second axe (4) dans le couloir de commutation pas-à-pas, viennent en prise avec la troisième surface active (9) de la liaison de traction/poussée notamment un prolongement de fixation à l'extrémité de la liaison de traction/poussée pour une troisième liaison par la forme qui fixe la liaison de traction/poussée dans la direction longitudinale du véhicule alors que, lorsque le levier sélecteur (1) est dans le couloir de commutation pour la commutation pas-à-pas, la première surface active (17) forme la première liaison par la forme avec l'installation de commutation pas-à-pas (19).

8. Installation de sélection selon l'une quelconque des revendications 1 à 7,
**caractérisée en ce que**
le boîtier (2) possède une surface d'appui (22) limitant le mouvement longitudinal du levier sélecteur (1) dans le couloir de commutation pour la présélection des étages de conduite à l'endroit où il est possible de commuter entre les deux couloirs de commutation.

9. Installation de sélection selon l'une quelconque des revendications 1 à 8,
**caractérisée en ce que**
le boîtier (2) comporte une fourchette (32) qui reçoit un prolongement (33) de la liaison de traction/poussée lorsque le levier sélecteur (1) occupe une position permettant la commutation entre les deux couloirs de commutation.

10. Installation de sélection selon l'une quelconque des revendications 3 à 9,
**caractérisée en ce que**
la coulisse (12) comporte des moyens d'accrochage qui, avec des moyens d'accrochage correspondants du boîtier (2), fixent la position du levier sélecteur (1) pour chaque couloir de commutation, dans la direction transversale au véhicule.

11. Installation de sélection selon la revendication 10,
**caractérisée en ce que**
les moyens d'accrochage sur la coulisse (12) sont des cavités (23) et les moyens d'accrochage complémentaires du boîtier (2) sont formés par un élément (25) à surface arrondie, monté sur celui-ci sous la charge d'un ressort (24).

12. Installation de sélection selon l'une quelconque des revendications 1 à 11,
**caractérisée en ce que**
la coulisse (12) comporte au moins une installation de détection qui détermine les positions du levier sélecteur (1) dans la direction longitudinale du véhicule, à la fois dans le couloir de sélection des étages de conduite et dans le couloir de commutation pas-à-pas.

13. Installation de sélection selon l'une quelconque des revendications 1 à 12,
**caractérisée en ce qu'**
elle comporte au moins une autre surface de butée (40) solidaire du boîtier, qui limite le mouvement longitudinal du levier sélecteur (1) dans le couloir de commutation pour la commutation pas-à-pas.

14. Installation de sélection selon la revendication 13,
**caractérisée par**
deux autres surfaces de butée (40, 41) solidaires du boîtier, tandis que la première autre surface de butée (40) solidaire du boîtier limite vers l'avant le mouvement longitudinal du levier sélecteur (1) et arrive en contact avec un côté du levier sélecteur (1) comme butée de fin de course, et la seconde autre surface de butée (41) limite le mouvement longitudinal du levier sélecteur (1) vers l'arrière et vient en contact avec celui-ci comme butée de fin de course de l'autre côté du levier sélecteur (1).

15. Installation de sélection selon l'une des revendications 13 ou 14,
**caractérisée par**
au moins une autre surface de butée (40, 41) solidaire du boîtier et adjacente à une autre surface active (42, 43) solidaire du boîtier, qui interdit le mouvement transversal du levier sélecteur (1) lorsque celui-ci ne se trouve pas dans la position permettant le basculement entre les deux couloirs de commutation.

16. Installation de sélection selon l'une quelconque des revendications 13 à 15,
**caractérisée en ce qu'**
au moins l'une des autres surfaces de butée (41) solidaires du boîtier et/ou au moins l'une des autres surfaces actives (43) solidaires du boîtier, sont réalisées directement sur le boîtier (2).
